# EUROPEAN PATENT APPLICATION

(11) **EP 4 574 454 A1**
(43) Date of publication of application: **25.06.2025**
(21) Application number: 24215700.6
(22) Date of filing: 27.11.2024
(51) Int. Cl.: B60C 1/00, C08L 7/00

(54) **TIRE**

(30) Priority: 21.12.2023 JP 2023216120
(71) Applicant: SUMITOMO RUBBER INDUSTRIES, LTD., Kobe-shi, Hyogo 651-0072 (JP)
(72) Inventor: ITO, Hiroshi, Hyogo, 651-0072 (JP)
(74) Representative: TBK

(57) **Abstract**

Provided is a tire comprising a tread part and a rubber-cord composite having a steel cord and a topping rubber that covers the steel cord, wherein a total cord outer periphery L per 50 mm in a tire width direction on a tire meridian cross section is 65 mm or more, wherein the composite comprises an adhesive material that bonds the steel cord and the topping rubber, wherein the adhesive material comprises an oxazine compound, wherein the topping rubber is composed of a rubber composition comprising a rubber component, carbon black, and sulfur, and wherein, in a case where A, in parts, represents a mass of the rubber component, B, in parts, represents a mass of the carbon black, C, in parts, represents a mass of the sulfur, and D, in parts, represents a mass of the oxazine compound, in the composite, as relative amounts, (B+C)/(A+D) is less than 1.0.

## Description

### TECHNICAL FIELD

The present invention relates to a tire.

### BACKGROUND OF THE INVENTION

In recent years, in the tire market, there has been a strong demand for steering stability, particularly during high-speed running. JP 2009-1672 A discloses that heat generation is reduced and rigidity of a rubber is enhanced, so that steering stability can be improved, by compounding predetermined chitin fibers and/or chitosan fibers in a base rubber constituting a tread part.

### SUMMARY OF THE INVENTION

It is an object of the present invention to provide a tire that can improve in steering stability during high-speed running.

The present invention relates to a tire comprising a tread part and a rubber-cord composite having a steel cord and a topping rubber that covers the steel cord, wherein a total cord outer periphery L per 50 mm in a tire width direction on a tire meridian cross section is 65 mm or more, wherein the composite comprises an adhesive material that bonds the steel cord and the topping rubber, wherein the adhesive material comprises an oxazine compound, wherein the topping rubber is composed of a rubber composition comprising a rubber component, carbon black, and sulfur, and wherein, in a case where A, in parts, represents a mass of the rubber component, B, in parts, represents a mass of the carbon black, C, in parts, represents a mass of the sulfur, and D, in parts, represents a mass of the oxazine compound, in the composite, as relative amounts, (B+C)/(A+D) is less than 1.0.

According to the present invention, provided is a tire that can improve in steering stability during high-speed running.

### BRIEF DESCRIPTION OF THE DRAWINGS

FIG. 1 is a meridional cross-sectional view of a tire relating to one embodiment of the present invention.
FIG. 2 is a view schematically showing a belt layer.
FIG. 3 is an explanatory view of one configuration example of a single-twist steel cord.
FIG. 4 is an explanatory view of one configuration example of a layer-twist steel cord.
FIG. 5 is a cross-sectional view of the layer-twist steel cord in FIG. 4 taken along a plane perpendicular to a longitudinal direction.

### DETAILED DESCRIPTION

The tire that is one embodiment of the present invention relates to a tire comprising a tread part and a rubber-cord composite having a steel cord and a topping rubber that covers the steel cord, wherein a total cord outer periphery L per 50 mm in a tire width direction on a tire meridian cross section is 65 mm or more, wherein the composite comprises an adhesive material that bonds the steel cord and the topping rubber, wherein the adhesive material comprises an oxazine compound, wherein the topping rubber is composed of a rubber composition comprising a rubber component, carbon black, and sulfur, and wherein, in a case where A, in parts, represents a mass of the rubber component, B, in parts, represents a mass of the carbon black, C, in parts, represents a mass of the sulfur, and D, in parts, represents a mass of the oxazine compound, in the composite, as relative amounts, (B+C)/(A+D) is less than 1.0.

Although it is not intended to be bound by any theory, a reason why the tire relating to the present embodiment can improve in steering stability during high-speed running is considered as follows.

It is considered that, in the rubber-cord composite, by relatively increasing the masses of the rubber component and the oxazine compound that is an adhesive component, while relatively decreasing the masses of the carbon black and the sulfur, heat generation can be reduced while ensuring rigidity of the composite. Moreover, it is considered that, by making the cord outer periphery larger than a predetermined value, adhesiveness between the steel cord and the topping rubber can be improved, so that rigidity of the composite can be further improved. Furthermore, the oxazine compound itself can enhance heat resistance of the topping rubber. It is considered that, with cooperation of these features, steering stability becomes easily secured even when high-speed running is continued for a long period of time and the composite is repeatedly deformed during running.

B is preferably 70 or less from the viewpoint of rolling resistance.

C is preferably 10 or less from the viewpoint of durability.

D is preferably 15 or less from the viewpoint of durability.

A total content of fillers based on 100 parts by mass of the rubber component in the rubber composition is preferably 70 parts by mass or less from the viewpoint of rolling resistance.

The rubber composition preferably comprises the oxazine compound. That is, the rubber composition constituting the topping rubber preferably comprises the oxazine compound as an adhesive material.

A distance G from a tread surface to the steel cord is preferably 15 mm or less from the viewpoint of steering stability.

When 70°C tan δ1 represents a tan δ at 70°C of a tread rubber and 70°C tan δ2 represents a tan δ at 70°C of the topping rubber, 70°C tan δ1/70°C tan δ2 is preferably 1.5 or less.

When 70°C tan δ1/70°C tan δ2 is within the above-described range, it is considered that deterioration of grip performance at a high temperature can be suppressed.

### <Definition>

A "tread part" is a member comprising a part that forms a ground-contacting surface of a tire, and in a case where the tire comprises a member that forms a tire skeleton from steel or a textile material such as a belt layer, a belt reinforcing layer, a carcass layer, and the like, on a cross section in a tire radial direction, a member arranged on an outer side therefrom in the tire radial direction.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "filament" is a steel wire that is the smallest unit forming a steel cord.

A "total cord outer periphery L per 50 mm in a tire width direction on a tire meridian cross section" refers to, for a steel cord present per 50 mm in the tire width direction on the tire meridian cross section, a total outer periphery length of a filament constituting the steel cord.

A "distance G from a tread surface to a steel cord" refers to a linear distance from a crown part to the outermost part of a rubber-cord composite in a tire radial direction on a tire equatorial plane, on a tire meridian cross section. The "crown part" refers to, in a case where the tire has no circumferential groove on the tire equatorial plane, the outermost end of a tread part intersecting with the tire equatorial plane in the tire radial direction, and in a case where the tire has a circumferential groove on the tire equatorial plane, a part where a line segment connecting the tread outermost ends in land parts at both ends of the circumferential groove intersects with the tire equatorial plane.

A "plasticizer" is a material that imparts plasticity to a rubber component, which is a component extracted from a rubber composition using acetone. The plasticizer includes a plasticizer that is liquid (in a liquid state) at 25°C and a plasticizer that is solid at 25°C. However, it shall not comprise wax and stearic acid commonly used in the tire industry.

A "content of a plasticizer" also includes an amount of a plasticizer contained in an extended rubber component previously extended with the plasticizer such as oil, a resin component, a liquid rubber component, and the like. The same applies to a content of oil, a content of a resin component, and a content of a liquid rubber, for example, an extending oil is included in the content of oil when an extending component is oil.

### <Measuring method>

The "distance G from the tread surface to the steel cord" is a value measured in a state where a tire is cut on a plane including a tire rotation axis and a width of a bead part is adjusted to a width of a standardized rim.

"70°C tan δ" is a loss tangent measured under a condition of a temperature at 70°C, a frequency of 10 Hz, an initial strain of 10%, a dynamic strain of ±1 %, and an elongation mode. A sample for 70°C tan δ measurement is a vulcanized rubber composition with 20 mm in length × 4 mm in width × 1 mm in thickness. When it is produced by being cut out from a tire, it is cut out from a topping rubber and a tread part so that a tire circumferential direction becomes a long side and a tire radial direction becomes a thickness direction.

A "nitrogen adsorption specific surface area (N₂SA) of carbon black" is measured according to JIS K 6217-2:2017. A "nitrogen adsorption specific surface area (N₂SA) of silica" is measured by the BET method according to ASTM D3037-93.

A procedure for producing a tire that is one embodiment of the present invention will be described in detail below. However, the following descriptions are illustrative for explaining the present invention, and are not intended to limit the technical scope of the present invention to this description range only.

### <Tire>

The tire relating to one embodiment of the present invention will be described below with reference to the drawings.

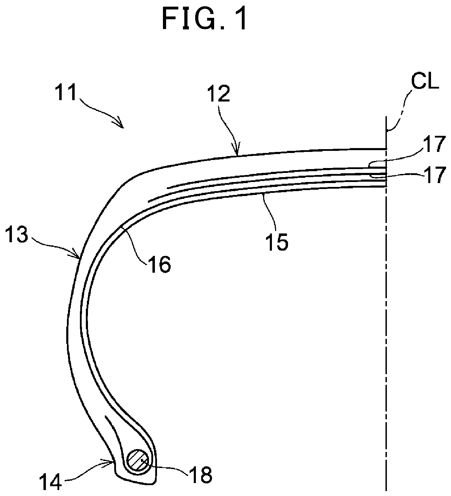

FIG. 1 shows a meridian cross section of a tire 11 relating to the present embodiment. Although FIG. 1 shows only a left-side part with respect to a center line (CL), it has consecutive similar structures also on the right side of the CL with the CL being as an axis of symmetry. As shown in FIG. 1, the tire 11 comprises a tread part 12, a sidewall part 13, a bead part 14, an inner liner 15, a carcass 16, a belt layer 17, and a bead wire 18. The belt layer 17 has two layers, but the number of layers is not particularly limited and can be arbitrarily selected.

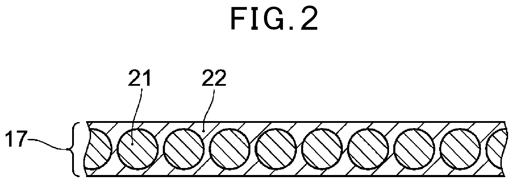

FIG. 2 shows a cross-sectional view of a steel cord 21 taken along a plane perpendicular to a longitudinal direction. Each belt layer 17 has a plurality of steel cords 21 and a topping rubber 22. The plurality of steel cords 21 are arranged in parallel in a row. Moreover, the topping rubber 22 covers the steel cord 21, and the entire circumference of each steel cord is covered with the topping rubber 22. The steel cord 21 is embedded in the topping rubber 22.

The steel cord 21 may or may not be inclined with respect to a tire circumferential direction. An inclination angle of the steel cord 21 with respect to the tire circumferential direction is not particularly limited, but is set, for example, in a range of 0° to 60°, preferably 5° to 45°, more preferably 10° to 30°.

The steel cord 21 comprises a filament. The steel cord may be a single monofilament cord (i.e., a cord having an 1×1 structure and consisting of one steel filament) or may have two or more steel filaments.

When one steel cord has two or more steel filaments, the steel cord preferably has a twist structure in which those steel filaments are twisted together along the longitudinal direction. The twist structure is not particularly limited, and can be, for example, a single-twist steel cord having an 1×N structure or a layer-twist steel cord having an N+M structure.

The single-twist structure can be expressed as, for example, an 1×N structure. The 1×N structure means a structure in which N filaments are twisted together so as to form a single layer (one layer). The "single layer" means a structure in which filaments are arranged so as to form a single layer (one layer) along a circumferential direction of one circle, in a cross section perpendicular to a longitudinal direction of a steel cord. Examples of the single-twist structure in the present embodiment include, for example, an 1×2 structure, an 1×3 structure, an 1×4 structure, and the like.

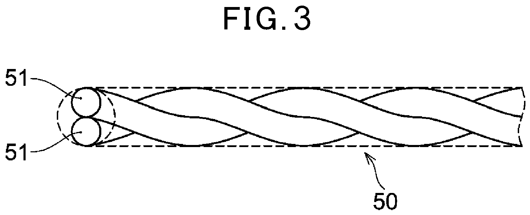

FIG. 3 is a perspective view of a steel cord having an 1×2 structure. In a steel cord 50 shown in FIG. 3, two filaments 51 are twisted together in a spiral shape along a longitudinal direction so as to form a single layer.

The layer-twist structure has a structure in which a plurality of filaments are wound in layers in order from the central part, in a cross section perpendicular to a longitudinal direction of a steel cord, and can be expressed as, for example, an N+M structure. The N+M structure means a structure having a core in which N filaments are twisted together in a spiral shape along the longitudinal direction and an outer sheath in which M filaments are twisted together in a spiral shape along the longitudinal direction of the core so as to cover the outer periphery of the core.

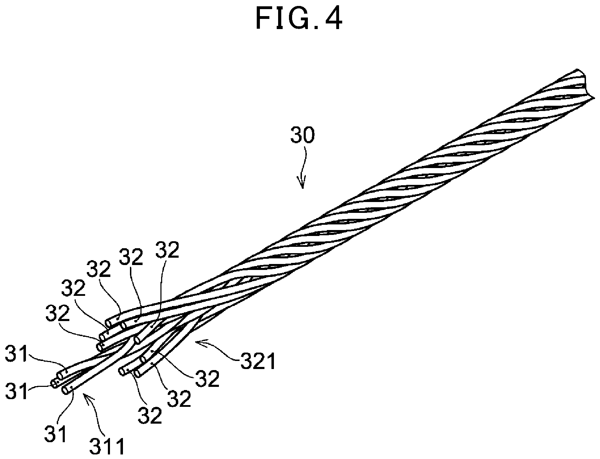

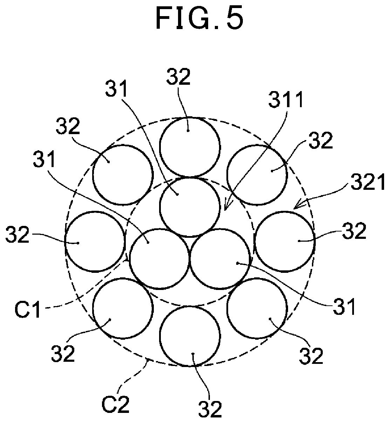

FIG. 4 is a perspective view of a steel cord having a 3+8 structure, and FIG. 5 schematically shows a cross-sectional view taken along a plane perpendicular to a longitudinal direction of FIG. 4. The steel cord 30 shown in FIGS. 4 and 5 forms a core 311 in which three filaments 31 are twisted together to form a first layer. Moreover, eight filaments 32 are twisted together in a spiral shape around the core 311 along the longitudinal direction of the core 311 to form one layer of an outer sheath 321. Besides, the "one layer" here means a structure in which filaments are arranged so as to form a single layer (one layer) along a circumferential direction of one circle, on a cross section perpendicular to a longitudinal direction of a steel cord. Specifically, as shown in FIG. 5, the filaments 32 constituting the outer sheath 321 are arranged so as to form one layer between a circumscribed circle C1 of the core 311 and a circumscribed circle C2 of the outer sheath 321.

The layer-twist structure is not limited to the above-described aspect, and can be, for example, a three-layer-twist structure in which a plurality of filaments are further twisted together in a spiral shape around the outer periphery of the outer sheath 321 of the steel cord 30 shown in FIGS. 4 and 5 along the longitudinal direction of the core 311, and the like. Furthermore, the core 311 and the number of filaments constituting the outer sheath 321 are not particularly limited, and can be selected arbitrarily depending on a filament diameter (a diameter of a filament), etc.

A material of the steel filament is not particularly limited, and a HT material (High Tensile), an SHT material (Super High Tensile), an UHT material (Ultra High Tensile), etc. can be used. Moreover, a recycled iron obtained by melting a used iron product may be used. Besides, when a steel cord obtained by twisting a plurality of steel filaments together is used, a steel filament, which is pre-formed in a longitudinal direction, may be used, from the viewpoint of improving durability by making it easy for a topping rubber to penetrate into the steel cord.

A filament diameter of the steel cord is not particularly limited and can be arbitrarily selected depending on required characteristics and the like, but it is preferably 0.13 mm or more, more preferably 0.16 mm or more, further preferably 0.19 mm or more, further preferably 0.22 mm or more, particularly preferably 0.25 mm or more, from the viewpoint of securing durability of the steel cord against shock. Moreover, it is preferably 0.70 mm or less, more preferably 0.60 mm or less, further preferably 0.50 mm or less, further preferably 0.40 mm or less, particularly preferably 0.35 mm or less, from the viewpoint of sufficiently absorbing shock to improve ride comfort.

A distance G from a tread surface to the steel cord is preferably 20 mm or less, more preferably 17 mm or less, further preferably 15 mm or less. Moreover, it is preferably 8 mm or more, more preferably 10 mm or more, further preferably 12 mm or more.

The steel cord relating to the present embodiment may be provided with a plating layer. Since the steel cord having a plating layer exerts a high wet heat-resistant adhesive performance even under a harsh condition of high temperature and humidity, peeling between the topping rubber and the steel cord can be prevented, and durability of the tire under a wet-heat condition can be improved. Besides, when the steel cord has a plurality of filaments, each filament can be provided with a plating layer on the surface thereof.

The plating layer can be formed by plating a copper layer, a zinc layer, a cobalt layer, etc. on the filament before wire drawing, and then diffusing the metal of each layer formed on the surface of the filament by heat treatment. Besides, an order of lamination of layers formed on the filament to form the plating layer is not particularly limited.

Next, a filament having a plating layer can be formed by wire-drawing the heat-treated material so as to have a desired filament diameter. When the steel cord is composed of one filament, it can be used as it is after wire drawing. Moreover, when the steel cord has a plurality of filaments, a steel cord having a plated layer can be formed by, for example, twisting the obtained filaments together so as to have a desired twist structure after wire drawing.

The number of cords per 50 mm in a tire width direction on a tire meridian cross section (also referred to as Ends) can be appropriately selected so that the total cord outer periphery L per 50 mm in the tire width direction on the tire meridian cross section satisfies a range that will be mentioned later, but it is preferably 33 or more, more preferably 34 or more, further preferably 35 or more. Moreover, the Ends is preferably 80 or less, more preferably 70 or less, further preferably 60 or less, further preferably 50 or less, particularly preferably 45 or less.

The total cord outer periphery L per 50 mm in the tire width direction on the tire meridian cross section is 65 mm or more, preferably 66 mm or more. When L is within the above-described ranges, it is considered that adhesiveness between the steel cord and the topping rubber can be improved, and rigidity of the composite can be further improved. On the other hand, a lower limit value of L is, but not particularly limited to, preferably 78 mm or less, more preferably 76 mm or less, further preferably 74 mm or less, particularly preferably 72 mm or less.

### (Rubber-cord composite)

A rubber-cord composite relating to the present embodiment can be obtained by covering the above-described steel cord with a predetermined topping rubber in accordance with a conventional method.

The rubber-cord composite relating to the present embodiment comprises an adhesive material that bonds the steel cord and the topping rubber. The adhesive material may be compounded in the topping rubber or may be applied to the surface of the cord, but it is preferably compounded in the topping rubber. That is, the rubber composition constituting the topping rubber preferably comprises an adhesive material.

The adhesive material relating to the present embodiment comprises an oxazine compound. The oxazine compound is not particularly limited as long as it is a compound comprising one oxygen atom, one nitrogen atom, and a 6-membered heterocycle that comprises a double bond. The oxazine compound is preferably a benzoxazine compound, more preferably a benzoxazine compound having two or more benzoxazine rings in one molecule, further preferably a benzoxazine compound having two 1 ,3-benzoxazine rings in one molecule, from the viewpoints of crosslinkability, adhesiveness, curability, etc.

Specific examples of the benzoxazine compound include, for example, a Pd-type benzoxazine compound obtained by a reaction of a diphenyldiamine compound, a phenol compound, and formaldehyde; an Fa-type benzoxazine compound obtained by a reaction of a bisphenol compound, an amine compound, and formaldehyde, and the like. Among them, a Pd-type benzoxazine compound is preferable from the viewpoint of heat resistance.

Examples of the Pd-type benzoxazine compound include, for example, a compound represented by the following formula (1): 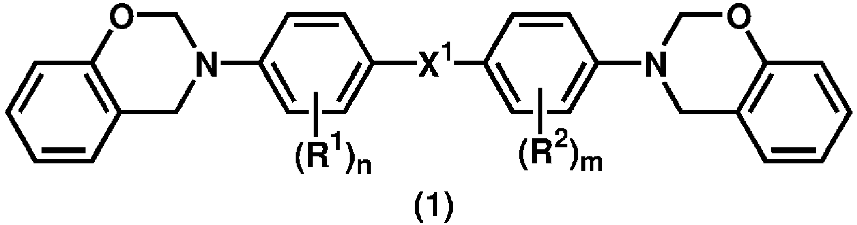 (wherein n and m each independently represents 0, 1, or 2; R¹ and R² each independently represents a hydrogen atom, a halogen atom, an alkyl group having 1 to 6 carbon atoms, or an alkoxy group having 1 to 6 carbon atoms; and X¹ represents an alkylene group having 1 to 6 carbon atoms, a group represented by the formula "-SO₂-", a group represented by the formula "-CO-", an oxygen atom, or a single bond).

Each of n and m is preferably 0. It is preferable that R¹ and R² each independently represents a hydrogen atom or a methyl group. X¹ is preferably a methylene group.

Examples of the Fa-type benzoxazine compound include, for example, a compound represented by the following formula (2): 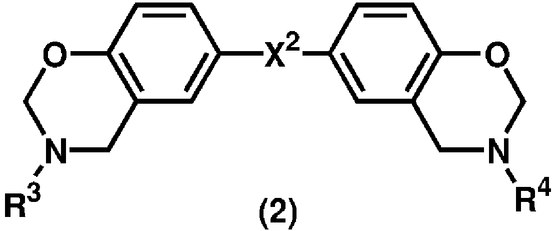 (wherein R³ and R⁴ each independently represents a hydrogen atom, an alkyl group having 1 to 6 carbon atoms, or a phenyl group (the phenyl may be substituted with 1 to 3 halogen atoms, an alkyl group having 1 to 6 carbon atoms, or an alkoxy group having 1 to 6 carbon atoms); and X² represents an alkylene group having 1 to 6 carbon atoms, a group represented by the formula "-SO₂-", a group represented by the formula "-CO-", an oxygen atom, or a single bond).

It is preferable that R³ and R⁴ each independently represents a phenyl group (the phenyl may be substituted with 1 to 3 alkyl groups having 1 to 6 carbon atoms). X² is preferably a methylene group.

The adhesive material relating to the present embodiment may further comprise an adhesive material other than the oxazine compound.

The tan δ at 70°C of the tread rubber (70°C tan δ1) is preferably 0.25 or less, more preferably 0.20 or less, further preferably 0.18 or less, from the viewpoint of durability during high-speed running. On the other hand, it is preferably 0.08 or more, more preferably 0.10 or more, further preferably 0.12 or more, from the viewpoint of grip performance. Besides, when the tread part 12 is composed of two or more rubber layers, 70°C tan δ1 shall refer to a tan δ at 70°C of a rubber layer on the outermost surface constituting a tread surface.

The tan δ at 70°C of the topping rubber (70°C tan δ2) is preferably 0.20 or less, more preferably 0.18 or less, further preferably 0.16 or less, from the viewpoint of rolling resistance. On the other hand, it is preferably 0.06 or more, more preferably 0.08 or more, further preferably 0.10 or more, from the viewpoint of grip performance at a high temperature.

70°C tan δ1/70°C tan δ2 is preferably 1.5 or less, more preferably 1.4 or less. When 70°C tan δ1/70°C tan δ2 is within the above-described ranges, it is considered that deterioration of grip performance at a high temperature can be suppressed. On the other hand, a lower limit value of 70°C tan δ1/70°C tan δ2 is, but not particularly limited to, preferably 0.6 or more, more preferably 0.8 or more, further preferably 1.0 or more, further preferably 1.1 or more, particularly preferably 1.2 or more.

Besides, 70°C tan δ of each of the rubber composition constituting the topping rubber and the rubber composition constituting the tread rubber can be appropriately adjusted depending on types and compounding amounts of a rubber component, a filler, a plasticizer, a vulcanizing agent, a vulcanization accelerator, and the like, which will be described later.

When A, in parts, represents a mass of a rubber component, B, in parts, represents a mass of carbon black, C, in parts, represents a mass of sulfur, and D, in parts, represents a mass of an oxazine compound, in a rubber-cord composite, as relative masses, (B+C)/(A+D) is less than 1.0, preferably less than 0.90, more preferably less than 0.80, further preferably less than 0.75, further preferably less than 0.70, particularly preferably less than 0.66. It is considered that, by relatively increasing the masses of the rubber component and the oxazine compound that is an adhesive component, while relatively decreasing the masses of the carbon black and the sulfur, heat generation can be reduced while ensuring rigidity of the composite. On the other hand, (B+C)/(A+D) is preferably greater than 0.01, more preferably greater than 0.10, further preferably greater than 0.30, particularly preferably greater than 0.50, from the viewpoint of durability.

### [Rubber composition]

A rubber composition constituting the topping rubber 22 that covers the steel cord (hereinafter referred to as the rubber composition relating to the present embodiment) comprises a rubber component, carbon black, and a filler and can be produced using raw materials described below. The rubber composition relating to the present embodiment will be described below.

### <Rubber component>

In the rubber composition relating to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. The diene-based rubber may be used alone, or two or more thereof may be used in combination. Moreover, as the diene-based rubber, an extended rubber which has been previously extended with a plasticizer which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

The rubber component relating to the present embodiment more preferably comprises an isoprene-based rubber, and may be a rubber component consisting of an isoprene-based rubber, from the viewpoints of cord adhesiveness and elongation at break.

### (Isoprene-based rubber)

The isoprene-based rubber is not particularly limited, examples of which include, for example, a natural rubber (NR), an isoprene rubber (IR), a refined natural rubber, and the like. Examples of the NR include, for example, SIR20, RSS#3, TSR20, and the like. Examples of the IR include, for example, IR2200 and the like. Examples of the refined natural rubber include, for example, an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

A content of an isoprene-based rubber when compounded in the rubber component is preferably 60% by mass or more, more preferably 70% by mass or more, further preferably 80% by mass or more, particularly preferably 90% by mass or more, from the viewpoint of the effects of the present invention. Moreover, an upper limit value of the content is not particularly limited and may be 100% by mass.

### (SBR)

An SBR is not particularly limited, examples of which include, for example, an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

A content of an SBR when compounded in the rubber component is preferably less than 40% by mass, more preferably less than 20% by mass, further preferably less than 10% by mass, particularly preferably less than 5% by mass, from the viewpoint of the effects of the present invention.

### (BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

A content of a BR when compounded in the rubber component is preferably less than 40% by mass, more preferably less than 20% by mass, further preferably less than 10% by mass, particularly preferably less than 5% by mass, from the viewpoint of the effects of the present invention.

### (Other rubber components)

The rubber component may comprise rubber components other than diene-based rubbers (non-diene-based rubbers) as long as they do not affect the effects of the present invention. As the non-diene-based rubbers, rubber components commonly used in the tire industry can be used, examples of which include, for example, a butyl-based rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination. Moreover, besides the above-described rubber components, the rubber component may or may not comprise a known thermoplastic elastomer.

### (Rubber component synthesized from recycle-derived/biomass-derived raw material)

A monomer that is a structural unit of a synthetic rubber such as an IR, a BR, an SBR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) is preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained by, for example, decomposing a rubber product such as a tire and the like under high temperature and pressure, by decomposing it by microwaves, or by extruding it after mechanically pulverizing it.

Furthermore, a monomer that is a structural unit of a synthetic rubber such as an IR, a BR, an SBR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according toASTM D6866-10.

pMC is a ratio of ¹⁴C concentration of a sample to ¹⁴C concentration of a modern standard carbon (modern standard reference) and a value used as an index indicating a biomass ratio of a compound. A significance of this value is mentioned below.

In 1 mole of carbon atoms (6.02×10²³ pieces), there are about 6.02×10^{11 14}C that are about one trillionth of the number of normal carbon atoms. A half-life of ¹⁴C is 5730 years, and ¹⁴C regularly decreases. It takes 226,000 years for all of them to decay. Thus, in fossil fuels such as coal, petroleum, a natural gas, and the like, where it is considered that 226,000 years or more have passed since carbon dioxide in the atmosphere was absorbed by plants to be fixed, all of ¹⁴C elements, which were contained in them at the beginning of fixation, decay. Therefore, in the present 21st century, fossil fuels such as coal, petroleum, a natural gas, and the like do not contain any ¹⁴C element. Therefore, chemical substances produced using these fossil fuels as raw materials do not contain any ¹⁴C element as well.

On the other hand, ¹⁴C is constantly generated by cosmic rays causing nuclear reactions in the atmosphere. From this, in ¹⁴C, a decrease in ¹⁴C due to radioactive decay and generation of ¹⁴C due to nuclear reactions are balanced, and the amount of ¹⁴C has been constant in the Earth's atmospheric environment. Thus, the ¹⁴C concentration of substances derived from biomass resources that have been circulating in the current environment becomes a value of about 1×10⁻¹² mol% based on total carbon atoms, as described above. Accordingly, by utilizing a difference between these values, a biomass ratio in a certain compound can be calculated.

This ¹⁴C is generally measured as follows. A ¹³C concentration (¹³C/¹²C) and a ¹⁴C concentration (¹⁴C/¹²C) are measured using an accelerator mass spectrometry based on a tandem accelerator. In the measurements, a ¹⁴C concentration in a circulating carbon in nature as of 1950 is adopted as the modern standard reference for the ¹⁴C concentration. As a specific reference material, an oxalic acid standard body provided by NIST (National Institute of Standards and Technology) is used. A specific radioactivity of carbon in this oxalic acid (radioactivity intensity of ¹⁴C per gram of carbon) is sorted for each carbon isotope, ¹³C is corrected to a constant value, and a value corrected for attenuation from 1950 to the date of measurement is used as a standard ¹⁴C concentration value (100%). A ratio of this value to a value actually measured for a sample becomes a pMC value.

Thus, if a rubber is produced from a material derived from 100% biomass, the ¹⁴C concentration shows a value of approximately 110 pMC as, currently, under a normal condition, it often does not reach 100, though there are regional differences and the like. On the other hand, if this ¹⁴C concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

### <Filler>

The rubber composition relating to the present embodiment comprises carbon black as a filler, and may further comprise silica. Moreover, the filler may be a filler consisting of carbon black.

### (Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Carbon Co. Ltd., Columbia Chemical Corporation, etc. can be used. These carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis of an organic material at 550 to 800°C, excluding oxygen, or by vacuum pyrolysis at a relatively low temperature ([0027]). Such carbon black obtained from the pyrolysis process usually lacks a functional group on its surface, as mentioned in [0004] of JP6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LDC Co., Ltd., etc. can be used.

A nitrogen adsorption specific surface area (N₂SA) of carbon black is preferably 20 m²/g or more, more preferably 30 m²/g or more, further preferably 40 m²/g or more, particularly preferably 50 m²/g or more, from the viewpoint of reinforcing property. Moreover, the N₂SA of carbon black is preferably 120 m²/g or less, more preferably 100 m²/g or less, further preferably 90 m²/g or less, from the viewpoint of fuel efficiency. Besides, the N₂SA of carbon black is measured by the above-described measuring method.

An average primary particle size of carbon black is preferably 36 nm or less, more preferably 32 nm or less, further preferably 28 nm or less, particularly preferably 24 nm or less. A lower limit of the average primary particle size is, but not particularly limited to, preferably 5 nm or more, more preferably 8 nm or more, further preferably 10 nm or more. Besides, the average primary particle size of carbon black is measured by the above-described measuring method.

A total content of carbon black based on 100 parts by mass of the rubber component is preferably 10 parts by mass or more, more preferably 20 parts by mass or more, further preferably 30 parts by mass or more, particularly preferably 40 parts by mass or more, from the viewpoint of durability. Moreover, it is preferably 100 parts by mass or less, more preferably 90 parts by mass or less, further preferably 80 parts by mass or less, further preferably 75 parts by mass or less, further preferably 70 parts by mass or less, particularly preferably 65 parts by mass or less, from the viewpoint of rolling resistance.

### (Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, a mineral-derived raw material such as quartz and the like, a bio-derived raw material such as rice husks and the like (e.g., silica made from a biomass material such as rice husks and the like), or silica recycled from a product containing silica. Among them, hydrous silica prepared by a wet process is preferable from the reason that it has many silanol groups. These silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.).

As an amorphous silica extracted from rice husks, those commercially available from Wilmar, etc. can be used.

The nitrogen adsorption specific surface area (N₂SA) of silica is preferably 100 m²/g or more, more preferably 120 m²/g or more, further preferably 140 m²/g or more, particularly preferably 160 m²/g or more, from the viewpoints of abrasion resistance and elongation at break. Moreover, it is preferably 350 m²/g or less, more preferably 300 m²/g or less, further preferably 250 m²/g or less, from the viewpoints of heat generation and processability. Besides, the N₂SA of silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica when compounded based on 100 parts by mass of the rubber component is preferably 5 parts by mass or more, more preferably 10 parts by mass or more, further preferably 12 parts by mass or more, particularly preferably 14 parts by mass or more, from the viewpoints of fuel efficiency and adhesiveness. Moreover, it is preferably 50 parts by mass or less, more preferably 45 parts by mass or less, further preferably 40 parts by mass or less, particularly preferably 35 parts by mass or less, from the viewpoint of tire strength.

### (Other fillers)

The filler may include other fillers besides silica and carbon black. Other fillers are not particularly limited, and those conventionally and commonly used in the tire industry can be compounded, such as, for example, aluminum hydroxide, calcium carbonate, alumina, clay, talc, and the like.

A total content of fillers based on 100 parts by mass of the rubber component is preferably 100 parts by mass or less, more preferably 90 parts by mass or less, further preferably 80 parts by mass or less, further preferably 75 parts by mass or less, further preferably 70 parts by mass or less, further preferably 65 parts by mass or less, particularly preferably 63 parts by mass or less, from the viewpoint of rolling resistance. Moreover, it is preferably 35 parts by mass or more, more preferably 40 parts by mass or more, further preferably 45 parts by mass or more, particularly preferably 50 parts by mass or more, from the viewpoint of durability.

### (Silane coupling agent)

Silica is preferably used in combination with a silane coupling agent. Examples of the silane coupling agent include, but not particularly limited to, for example, sulfide-based silane coupling agents such as bis(3-triethoxysilylpropyl)disulfide, bis(3-triethoxysilylpropyl)tetrasulfide, and the like; mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxy, and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. These silane coupling agents may be used alone, or two or more thereof may be used in combination.

A total content of silane coupling agents when compounded based on 100 parts by mass of the rubber component is preferably 0.5 parts by mass or more, more preferably 1.0 parts by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

### <Oxazine compound>

The rubber composition relating to the present embodiment preferably comprises an oxazine compound. As the oxazine compound, for example, the above-described oxazine compound contained in the rubber-cord composite can be used.

A content of an oxazine compound when compounded in the rubber composition relating to the present embodiment based on 100 parts by mass of the rubber component is preferably 1.0 parts by mass or more, more preferably 2.0 parts by mass or more, further preferably 3.0 parts by mass or more, from the viewpoint of adhesiveness. Moreover, the content is preferably 20 parts by mass or less, more preferably 15 parts by mass or less, further preferably 12 parts by mass or less.

### <Cobalt compound>

The rubber composition relating to the present embodiment preferably comprises a cobalt compound. When the rubber composition comprises a cobalt compound, the adhesive force between the steel cord and the topping rubber can be enhanced, so that a tire having an excellent durability can be obtained. Examples of the cobalt compound include, for example, cobalt alone, cobalt chloride, an organic acid cobalt, an inorganic acid cobalt, and the like. Among them, an organic acid cobalt is preferable. These cobalt compounds may be used alone, or two or more thereof may be used in combination.

The organic acid cobalt is appropriately used to promote adhesion between the plated layer of the steel cord and the rubber composition and prevent plating components from flowing out into the rubber composition during hygroscopic thermal deterioration. The number of carbon atoms of the organic acid constituting the organic acid cobalt is preferably 12 or more and 24 or less, more preferably 14 or more and 22 or less. Specific examples of an organic acid cobalt salt include, for example, cobalt stearate, cobalt naphthenate, cobalt neodecanoate, cobalt rosinate, cobalt versatate, cobalt tallate, cobalt oleate, cobalt linoleate, cobalt linolenate, cobalt palmitate, and the like. Moreover, the organic acid cobalt may be a composite salt in which a part of the organic acid is replaced with boric acid (for example, cobalt boron 3 neodecanoate).

Examples of the inorganic acid cobalt include, for example, cobalt sulfate, cobalt nitrate, cobalt phosphate, cobalt chromate, and the like.

A content of a cobalt compound when compounded based on 100 parts by mass of the rubber component is preferably 0.1 parts by mass or more, more preferably 0.3 parts by mass or more, further preferably 0.5 parts by mass or more, from the viewpoint of adhesiveness. Moreover, the content is preferably 3.0 parts by mass or less, more preferably 2.0 parts by mass or less, further preferably 1.5 parts by mass or less.

### (Other compounding agents)

The rubber composition relating to the present embodiment can appropriately comprise compounding agents conventionally and commonly used in the tire industry, for example, a plasticizer, a thermosetting resin, an organic acid zinc, a vulcanized rubber particle, processing aid, wax, an antioxidant, stearic acid, zinc oxide, a vulcanizing agent, a vulcanization accelerator, and the like, in addition to the above-described components.

The plasticizer is a material that imparts plasticity to the rubber component, and has a concept that includes both a plasticizer that is liquid at 25°C and a plasticizer that is solid at a normal temperature (25°C). Examples of the plasticizer include, a resin component, oil, a liquid rubber, an ester-based plasticizer, and the like. These softening agents may be ones derived from mineral resources such as petroleum, a natural gas, and the like, or naphtha-derived ones recycled from a rubber product or a non-rubber product. Moreover, a hydrocarbon component having a low-molecular weight obtained by pyrolyzing and extracting a used tire or a product comprising various components may be used as a plasticizer. These plasticizers may be used alone, or two or more thereof may be used in combination.

### (Resin component)

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, respectively, or two or more thereof may be used in combination.

### <<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

### <<C5-based resin>>

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

### <<C5/C9-based resin>>

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

### <<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

### <<Aromatic vinyl-based resin>>

An "aromatic vinyl-based resin" refers to a resin comprising an aromatic vinyl compound such as styrene, α-methylstyrene, vinyltoluene, p-chlorostyrene, and the like as a monomer component having the largest content, and may be one obtained by hydrogenating or modifying them. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

### <<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

### <<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

### <<Terpene-based resin>>

A "terpene-based resin" refers to a resin comprising a terpene compound such as α-pinene, β-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, α-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

### <<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

### <<Phenol-based resin>>

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant may be used.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extract Solvated), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like.

In the present specification, examples of the "vegetable oil" include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at a normal temperature (25°C). These vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be any of 1-monoacylglycerol, 2-monoacylglycerol, 1,2-diacylglycerol, 1,3-diacylglycerol, and triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at a normal temperature (25°C).

As a method of confirming whether the rubber composition comprises the above-described acylglycerol, the confirmation can be performed by, but not particularly limited to, for example, ¹H-NMR measurement below. Specifically, a heavy chloroform in which a rubber composition containing triacylglycerol is immersed at normal temperature (25°C) for 24 hours and then removed is subjected to ¹H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of ±0.10 ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, an oleyl alcohol derived therefrom, or the like.

A content of oil when compounded based on 100 parts by mass of the rubber component is preferably 1.0 parts by mass or more, more preferably 1.5 parts by mass or more, further preferably 2.0 parts by mass or more, from the viewpoint of the effects of the present invention. Moreover, the content is preferably less than 40 parts by mass, more preferably less than 30 parts by mass, further preferably less than 20 parts by mass, particularly preferably less than 10 parts by mass.

The liquid rubber is not particularly limited as long as it is a polymer in a liquid state at normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone, or two or more thereof may be used in combination.

A content of a plasticizer when compounded based on 100 parts by mass of the rubber component (a total amount of a plurality of plasticizers when used in combination) is preferably 1.0 parts by mass or more, more preferably 1.5 parts by mass or more, further preferably 2.0 parts by mass or more, from the viewpoint of the effects of the present invention. Moreover, the content is preferably less than 40 parts by mass, more preferably less than 30 parts by mass, further preferably less than 20 parts by mass, particularly preferably less than 10 parts by mass.

The term "thermosetting resin" refers to a resin which is polymerized by heating so that a polymer forms a network structure and which is hardened to be irreversible. The thermosetting resin is not particularly limited, examples of which include, for example, a resorcinol resin, a modified resorcinol resin, a cresol resin, a modified cresol resin, a phenol resin, a modified phenol resin, and the like. These thermosetting resins may be used alone, or two or more thereof may be used in combination. By compounding these thermosetting resins, adhesiveness to a cord, elongation at break, and complex elastic modulus can be improved.

The number of carbon atoms of an organic acid constituting the organic acid zinc is preferably 10 or more and 24 or less, more preferably 12 or more and 22 or less. Specific examples of the organic acid zinc include, for example, zinc laurate, zinc oleate, zinc stearate, zinc benzoate, zinc t-butylbenzoate, and the like. These organic acid zincs may be used alone, or two or more thereof may be used in combination.

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. They may be used alone, or two or more thereof may be used in combination.

The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used.

A content of a vulcanized rubber particle when compounded based on 100 parts by mass of the rubber component can be appropriately adjusted, for example, within a range of greater than 1 part by mass and less than 80 parts by mass.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. These processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. These waxes may be used alone, or two or more thereof may be used in combination.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, a naphthylamine-based antioxidant such as phenyl-α-naphthylamine and the like; a diphenylamine-based antioxidant such as an octylated diphenylamine, 4,4'-bis(α,α'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and polymers of N-(1,3-dimethylbutyl)-N'-phenyl-p-phenylenediamine and 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. These antioxidants may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, further preferably 2.5 parts by mass or more, particularly preferably 3.5 parts by mass or more, from the viewpoint of processability. Moreover, it is preferably 15 parts by mass or less, more preferably 12 parts by mass or less, further preferably 10 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. Moreover, as a vulcanizing agent other than sulfur, a known organic crosslinking agent can also be used. These vulcanizing agents may be used alone, or two or more thereof may be used in combination.

An amount of sulfur based on 100 parts by mass of the rubber component is preferably 4.0 parts by mass or more, more preferably 5.0 parts by mass or more, further preferably 5.5 parts by mass or more, further preferably 5.7 parts by mass or more, particularly preferably 6.0 parts by mass or more, from the viewpoint of adhesive performance of a steel cord. Moreover, it is preferably 10 parts by mass or less, more preferably 9.0 parts by mass or less, further preferably 8.0 parts by mass or less, particularly preferably 7.0 parts by mass or less, from the viewpoint of durability. Besides, a content of a vulcanizing agent when an oil-containing sulfur is used as the vulcanizing agent shall be a total content of pure sulfur comprised in the oil-containing sulfur.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamate-based vulcanization accelerator, a caprolactam disulfide, and the like. These vulcanization accelerators may be used alone, or two or more thereof may be used in combination. Among them, one or more vulcanization accelerators selected from the group consisting of sulfenamide-based vulcanization accelerators and thiazole-based vulcanization accelerators are preferable, and sulfenamide-based vulcanization accelerators are more preferable, from the viewpoint of desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable, and MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable. However, a content of a guanidine-based vulcanization accelerator when compounded based on 100 parts by mass of the rubber component is preferably 0.5 parts by mass or less, more preferably 0.3 parts by mass or less, further preferably 0.1 parts by mass or less, and it is particularly preferable that the rubber composition does not comprise a guanidine-based vulcanization accelerator, from the viewpoint of the effects of the present invention.

A content of a vulcanization accelerator when compounded based on 100 parts by mass of the rubber component is preferably 0.3 parts by mass or more, preferably 0.5 parts by mass or more, further preferably 0.7 parts by mass or more, from the viewpoint of securing a sufficient vulcanization rate. Moreover, the content of the vulcanization accelerator is preferably 10 parts by mass or less, more preferably 5.0 parts by mass or less, further preferably 3.0 parts by mass or less, from the viewpoint of suppressing blooming.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

### <Production>

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like.

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes.

The tire relating to the present embodiment can be produced by a usual method using the topping rubber composed of the steel cord and the rubber composition as described. That is, a steel cord is covered with an unvulcanized rubber composition corresponding to the topping rubber to obtain a rubber-cord composite. That is, it can be produced by attaching the rubber-cord composite together with a tread part and other tire members and molding them by a usual method on a tire molding machine, to form an unvulcanized tire, followed by heating and pressurizing this unvulcanized tire in a vulcanizer. A vulcanization condition is not particularly limited. Examples of vulcanization include, for example, a method of vulcanizing at 150 to 200°C for 10 to 30 minutes.

### <Application>

The tire relating to the present embodiment can be a general-purpose tire such as a tire for a passenger car, a tire for a truck/bus, a motorcycle tire, and the like, or can be a racing tire. Besides, the tire for a passenger car is a tire on the premise that it is mounted on a car running on four wheels and refers to one having a maximum load capacity of 1000 kg or less. Moreover, the tire relating to the present embodiment can be used as an all-season tire, a summer tire, or a winter tire such as a studless tire and the like.

### EXAMPLES

Examples considered to be preferable in implementation (Examples) are shown below, though the scope of the present invention is not limited to Examples. Results, which are calculated based on evaluation methods described below considering tires having a steel cord covered with a topping rubber obtained according to the compounding in Table 1 using various chemicals shown below, are shown in Table 1.

Various chemicals used in Examples and Comparative examples are collectively shown below.
NR: TSR20
Carbon black: Show Black N330 manufactured by Cabot Japan K.K. (N₂SA: 75 m²/g, average primary particle size: 30 nm)
Silica: ULTRASIL VN3 manufactured by Evonik Industries AG (N₂SA: 175 m²/g, average primary particle size: 17 nm)
Silane coupling agent: Si69 manufactured by Evonik Industries AG (bis(3-triethoxysilylpropyl)tetrasulfide)
Oil: Diana Process NH-60 manufactured by Idemitsu Kosan Co., Ltd. (aromatic process oil)
Oxazine compound: Pd-type benzoxazine compound represented by the following formula (3), manufactured by Shikoku Chemicals Corporation 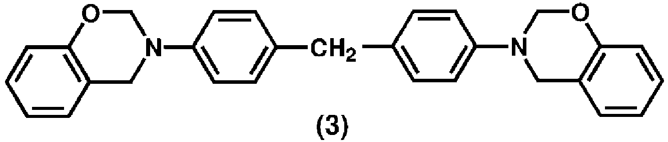
Antioxidant: Nocrac 224 manufactured by Ouchi Shinko Chemical Industry Co., Ltd. (2,2,4-trimethyl-1,2-dihydroquinoline polymer)
Cobalt compound: Cost-F manufactured by DIC Corporation (cobalt stearate)
Zinc oxide: Zinc oxide No. 2 manufactured by Mitsui Mining & Smelting Co., Ltd.
Sulfur: MUCRON OT-20 manufactured by Shikoku Chemicals Corporation (insoluble sulfur, oil content: 20% by mass)
Vulcanization accelerator: ACCEL DZ-G manufactured by Kawaguchi Chemical Industry Co., LTD. (N,N-dicyclohexyl-2-benzothiazolylsulfenam ide)

### (Examples and Comparative examples)

According to the compounding formulations shown in Table 1, using a 1.7 L closed Banbury mixer, all chemicals other than sulfur and vulcanization accelerators are kneaded until a temperature reaches a discharge temperature at 160°C for 5 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The unvulcanized rubber composition is used to cover a steel cord having the structure described in Table 1 (filament diameter: 0.30 mm) to obtain a rubber-cord composite. This rubber-cord composite is attached together with a tread part and other tire members to prepare an unvulcanized tire, and the unvulcanized tire is vulcanized at 170°C to obtain each test tire described in Table 1 (size: 195/65R15, distance G from tread surface to steel cord: 15 mm, inclination angle of cord: 15°). Besides, in configurations of the steel cords in Table 1, "1×2 36e" means that there are 36 steel cords (36 Ends) of 1×2 structure per 50 mm in a tire width direction on a tire meridian cross section, and "1×2 32e" means that there are 32 steel cords (32 Ends) of 1×2 structure per 50 mm in the tire width direction on the tire meridian cross section. In the case of "1×2 32e", a total cord outer periphery L per 50 mm in the tire width direction on the tire meridian cross section is less than 65 mm.

### <Measurement of tan δ>

For each vulcanized rubber test piece produced by being cut out with 20 mm in length × 4 mm in width × 1 mm in thickness from a topping rubber covering a tread part and a steel cord of each test tire so that a tire circumferential direction becomes a long side and a tire radial direction becomes a thickness direction, using a dynamic viscoelasticity measuring device (EPLEXOR series manufactured by gabo Systemtechnik GmbH), a tan δ is measured under a condition of a temperature at 70°C, a frequency of 10 Hz, an initial strain of 10%, a dynamic strain of 1%, and an extension mode.

### <Steering stability>

Each test tire is mounted on each of four wheels of an FF passenger vehicle with a displacement of 2000 cc, the vehicle is made run on a test course with a dry asphalt road surface, and handling characteristics is evaluated based on each feeling of running straight, changing lanes, and accelerating/decelerating when running by a test driver at 100 km/h. The evaluation is performed using an integer value of 1 to 5 points to calculate a total score by 20 test drivers based on evaluation criteria that the higher the score is, the better the handling characteristics is. A total score of a control tire (Comparative example 1) is converted into a reference value (100), and the evaluation result for each test tire is indicated as an index in proportion to the total score.

**Table 1**

| | Example | | | | | Comparative example | | | |
|---|---|---|---|---|---|---|---|---|---|
| | 1 | 2 | 3 | 4 | 5 | 1 | 2 | 3 | 4 |
| Compounding amount (part by mass) | | | | | | | | | |
| NR | 100 | 100 | 100 | 100 | 100 | 100 | 100 | 100 | 100 |
| Carbon black | 60 | 60 | 60 | 40 | 60 | 65 | 60 | 65 | 65 |
| Silica | - | - | - | 20 | - | - | - | - | - |
| Silane coupling agent | - | - | - | 1.2 | - | - | - | - | - |
| Oil | 3.0 | 3.0 | 3.0 | 3.0 | 3.0 | 3.0 | 3.0 | 3.0 | 3.0 |
| Oxazine compound | 3.0 | 5.0 | 10 | 10 | 5.0 | | | | 3.0 |
| Antioxidant | 2.0 | 2.0 | 2.0 | 2.0 | 2.0 | 2.0 | 2.0 | 2.0 | 2.0 |
| Cobalt compound | 1.0 | 1.0 | 1.0 | 1.0 | 1.0 | 1.0 | 1.0 | 1.0 | 1.0 |
| Zinc oxide | 10 | 10 | 10 | 10 | 10 | 10 | 10 | 10 | 10 |
| Sulfur | 6.0 | 6.0 | 6.0 | 6.0 | 6.0 | 6.5 | 6.5 | 6.0 | 6.0 |
| Vulcanization accelerator | 1.2 | 1.2 | 1.2 | 1.2 | 1.2 | 1.2 | 1.2 | 1.2 | 1.2 |
| (B+C)/(A+D) | 0.64 | 0.63 | 0.60 | 0.42 | 0.63 | 0.72 | 0.67 | 0.71 | 0.69 |
| 70°C tan δ1/70°C tan δ2 | 1.31 | 1.31 | 1.26 | 1.31 | 1.31 | 1.26 | 1.31 | 1.17 | 1.23 |
| Configuration of steel cord | 1×2 | 1×2 | 1×2 | 1×2 | 1×2 | 1×2 | 1×2 | 1×2 | 1×2 |
| | 36e | 36e | 36e | 36e | 40e | 36e | 36e | 36e | 32e |
| Steering stability | 110 | 115 | 120 | 120 | 120 | 100 | 95 | 98 | 98 |

### REFERENCE SIGNS LIST

11. Tire
12. Tread part
13. Sidewall part
14. Bead part
15. Inner liner
16. Carcass
17. Belt layer
18. Bead wire
21, 30, 50. Steel cord
22. Topping rubber
31, 32, 51. Filament
311. Core
321. Outer sheath
CL. Center line

## Claims

1. A tire comprising a tread part and a rubber-cord composite having a steel cord and a topping rubber that covers the steel cord,
wherein a total cord outer periphery L per 50 mm in a tire width direction on a tire meridian cross section is 65 mm or more,
wherein the composite comprises an adhesive material that bonds the steel cord and the topping rubber,
wherein the adhesive material comprises an oxazine compound,
wherein the topping rubber is composed of a rubber composition comprising a rubber component, carbon black, and sulfur, and
wherein, in a case where A, in parts, represents a mass of the rubber component, B, in parts, represents a mass of the carbon black, C, in parts, represents a mass of the sulfur, and D, in parts, represents a mass of the oxazine compound, in the composite, as relative amounts, (B+C)/(A+D) is less than 1.0.

2. The tire of claim 1, wherein (B+C)/(A+D) is less than 0.75.

3. The tire of claim 1 or 2, wherein B is 70 or less.

4. The tire of any one of claims 1 to 3, wherein C is 10 or less.

5. The tire of any one of claims 1 to 4, wherein D is 15 or less.

6. The tire of any one of claims 1 to 5, wherein a total content of fillers based on 100 parts by mass of the rubber component in the rubber composition is 70 parts by mass or less.

7. The tire of any one of claims 1 to 6, wherein the rubber composition comprises the oxazine compound.

8. The tire of any one of claims 1 to 7, wherein a distance G from a tread surface to the steel cord is 15 mm or less.

9. The tire of any one of claims 1 to 8, wherein, in a case where 70°C tan δ1 represents a tan δ at 70°C of a tread rubber and 70°C tan δ2 represents a tan δ at 70°C of the topping rubber, 70°C tan δ1/70°C tan δ2 is 1.5 or less.
